# DEMANDE DE BREVET EUROPEEN

(11) **EP 0 554 155 A1**
(43) Date de publication de la demande: **04.08.1993**
(21) Numéro de dépôt: 93400171.0
(22) Date de dépôt: 26.01.1993
(51) Int. Cl.: H02G 11/02, B66C 13/12, B65H 75/34

(54) **Dispositif d'enroulement et de déroulement d'un câble de transport d'énergie, ou analogue**

(30) Priorité: 27.01.1992 FR 9200838
(71) Demandeur: DELACHAUX S.A., F-92231 Gennevilliers (FR)
(72) Inventeur: Lacour, Gilles, F-01300 Belley (FR)
(74) Mandataire: Martin, Jean-Jacques

(57) **Abrégé**

La présente invention concerne un dispositif d'enroulement et de déroulement d'un câble de transport d'énergie, ou analogue, au fur et à mesure d'un déplacement relatif de deux zones raccordées mutuellement par ce câble ou analogue.

L'enroulement et le déroulement du câble (2) sont provoqués par un moteur asynchrone (14) dont l'arbre de sortie est en prise permanente, sans glissement, avec un tambour (8) d'enroulement et de déroulement du câble (2). La vitesse et le sens de rotation de l'arbre de sortie du moteur (14) sont commandés, en fonction d'une mesure de la traction dans le câble (2), par régulation de l'alimentation du moteur (14) en variation de fréquence, de façon à maintenir cette traction à une valeur approximativement constante. Des moyens (24) sont prévus pour exercer un freinage unidirectionnel, calibré, de l'arbre de sortie du moteur (14) dans le sens correspondant au sens (12) de déroulement du câble, ce qui permet de conserver la régulation du moteur (14) pendant le déroulement du câble (2).

## Description

La présente invention concerne un dispositif d'enroulement et de déroulement d'un câble de transport d'énergie, ou analogue, au fur et à mesure d'un déplacement relatif de deux zones raccordées mutuellement par le câble ou analogue, ledit dispositif comportant :
- un support placé dans l'une desdites zones,
- un tambour monté à la rotation autour d'un premier axe déterminé par rapport au support et susceptible de recevoir le câble ou analogue,
- des moyens d'entrainement du tambour à la rotation autour du premier axe dans un sens d'enroulement du câble ou analogue et dans un sens de déroulement du câble ou analogue, en exerçant une traction sur le câble entre lesdites zones, ces moyens d'entrainement comportant eux-mêmes un moteur électrique d'entrainement porté par le support et présentant un arbre rotatif de sortie et une chaîne de liaison cinématique entre l'arbre de sortie du moteur d'entrainement et le tambour de façon à associer aux sens d'enroulement et de déroulement des sens respectifs de rotation de l'arbre de sortie du moteur d'entrainement,
- des moyens de commande des moyens d'entrainement, comportant des moyens d'alimentation du moteur d'entrainement en électricité.

De tels dispositifs sont fréquemment utilisés par exemple pour alimenter en électricité, à partir d'une prise de courant fixe par rapport au sol, un engin roulant sur le sol, tel qu'une grue ou une locomotive à faible rayon d'action, ou montant et descendant par rapport au sol, tel qu'une plateforme élevatrice, cet engin constituant ladite zone portant le support alors que le sol, ou plus précisément la prise de courant fixe par rapport au sol, constitue l'autre desdites zones. De tels dispositifs sont également utilisés pour assurer l'alimentation en électricité, à partir d'un engin de levage tel qu'une grue, constituant ladite zone portant le support, d'un dispositif de préhension tel qu'un électro-aimant ou une benne preneuse électrohydraulique, constituant ladite autre zone, porté par cet engin à une hauteur relative variable, par l'intermédiaire d'un câble ou autre lien de suspension. On peut également utiliser de tels dispositifs pour enrouler ou dérouler, dans des conditions analogues, un faisceau souple de fibres optiques ou une conduite souple de fluide sous pression, ces exemples n'étant nullement limitatifs. Suivant les cas, l'enroulement du câble sur le tambour s'effectue en spirale, ou en hélice, ou selon une combinaison de ces deux modes d'enroulement.

Ces dispositifs doivent à la fois assurer une bonne adaptation, à la vitesse de déplacement relatif des deux zones, de la vitesse d'enroulement ou de déroulement du câble ou analogue sur le tambour, exprimée en termes de vitesse linéaire, tangentielle par rapport au tambour, à une distance de l'axe de celui-ci ou premier axe qui varie à chaque instant lorsque l'enroulement s'effectue en spirale, afin d'éviter aussi bien les mous que les tractions excessives dans le câble ou analogue.

A cet effet, on utilise le plus souvent comme moteur un moteur synchrone qu'une chaîne de liaison cinématique comportant un coupleur autorisant un glissement relie au tambour. Le moteur est alimenté en électricité de telle sorte que son arbre de sortie ne tourne que dans le sens correspondant au sens d'enroulement du tambour, à une vitesse angulaire toujours en excès par rapport aux besoins, exprimés en termes de vitesse angulaire essentiellement variable du tambour et compte tenu du rapport de transmission de la chaîne de liaison cinématique ; le coupleur est calibré de telle sorte que, quel que soit le couple résistant opposé par le câble à l'enroulement sur le tambour, compte tenu de la traction admissible dans ce câble et de la distance variable, vis-à-vis de l'axe du tambour ou premier axe, à laquelle cette traction s'applique sur le tambour d'enroulement, ce dernier tourne effectivement dans le sens d'enroulement et le câble s'enroule effectivement sur lui au fur et à mesure que les deux zones qu'il raccorde mutuellement se rapprochent ; l'adaptation en couple et en vitesse entre l'arbre de sortie du moteur et le tambour s'effectue par glissement du coupleur, qui absorbe ainsi de l'énergie qu'il restitue généralement sous forme d'énergie calorifique. Dans les phases de déroulement, le câble ou analogue ne se déroule, en entraînant le tambour à la rotation dans le sens correspondant, que du fait de la traction qu'il subit au fur et à mesure de l'éloignement relatif des deux zones qu'il raccorde mutuellement, et l'ensemble formé par le coupleur à glissement et le moteur oppose un couple résistant en absorbant de l'énergie qui, généralement, se dissipe également sous forme d'énergie calorifique.

Sous cette forme connue, les dispositifs d'enroulement et de déroulement d'un câble de transport d'énergie ou analogue donnent toute satisfaction tant que la longueur de câble reste modeste, c'est-à-dire que la variation de rayon d'enroulement sur le tambour reste limitée et que, dans le cas où le câble présente une hauteur variable pendant librement du tambour d'enroulement, condition que l'on trouve par exemple lorsqu'un dispositif d'enroulement et de déroulement est utilisé pour alimenter une plateforme élévatrice ou une charge suspendue à un engin de levage comme on l'a indiqué plus haut, la variation de cette hauteur s'effectue dans des proportions limitées.

Si, par contre, la longueur de câble à enrouler ou dérouler est importante et si, éventuellement, une longueur libre de câble ou analogue variant dans des proportions importantes est suspendue directement au tambour, les dispositifs connus ne peuvent plus donner satisfaction, notamment du fait qu'il devient difficile de calibrer le coupleur à glissement de telle sorte que, à la fois, la traction dans le câble ou analogue reste en permanence inférieure à un seuil de sécurité, évitant tout risque d'endommagement, et le dispositif soit capable d'enrouler le câble ou analogue sur un rayon important du tambour et/ou soit capable d'enrouler des longueurs libres largement variables de câble ou analogue en pendant directement.

En outre, sous leur forme connue, les dispositifs d'enroulement et de déroulement d'un câble de transport d'énergie ou analogue présentent un inconvénient en ce que les accélérations importantes dans le déplacement relatif des deux zones que le câble ou analogue raccorde mutuellement, et les vitesses élevées dans ce déplacement, donnent lieu par inertie à de grandes variations de traction dans le câble ou analogue, cette traction pouvant atteindre ainsi des valeurs inadmissibles.

Le but de la présente invention est de remédier à ces inconvénients et, à cet effet, la présente invention propose un dispositif d'enroulement et de déroulement d'un câble ou analogue, du type indiqué en préambule, en outre caractérisé en ce que :
- le moteur d'entraînement est de type asynchrone, ses moyens d'alimentation en électricité étant des moyens d'alimentation en courant alternatif, et son arbre de sortie est en prise permanente, sans glissement, avec le tambour par l'intermédiaire de la chaîne de liaison cinématique,
- les moyens de commande sont propres à provoquer l'alimentation du moteur d'entraînement par les moyens d'alimentation de celui-ci en électricité de façon à faire tourner son arbre de sortie soit dans un sens correspondant au sens d'enroulement, soit dans un sens correspondant du sens de déroulement, ou à interrompre l'alimentation du moteur d'entraînement, et comportent des moyens, sensibles à ladite traction, pour réguler l'alimentation du moteur d'entraînement en variation de fréquence de façon à maintenir ladite traction à une valeur approximativement constante à l'enroulement et au déroulement du câble ou analogue,
- des moyens sont prévus pour exercer un freinage unidirectionnel, calibré, de l'arbre de sortie du moteur d'entraînement dans le sens correspondant au sens de déroulement.

La présente invention propose par conséquent d'assurer par moteur l'entraînement du tambour à la rotation non seulement dans le sens d'enroulement mais également dans le sens de déroulement, en assurant une liaison cinématique sans glissement entre le tambour et l'arbre de sortie de ce moteur et en utilisant un moteur d'un type propre à autoriser non seulement une rotation de son arbre de sortie dans les deux sens, mais également une adaptation fine de la vitesse de rotation de cet arbre de sortie en fonction des besoins en vitesse linéaire d'enroulement ou de déroulement du câble ou analogue dans la zone du tambour, à chaque instant ; ces besoins sont exprimés en termes de traction appliquée au câble ou analogue, laquelle doit présenter une valeur suffisamment élevée pour éviter tout mou dans le câble ou analogue mais doit néanmoins rester en dessous d'un seuil déterminé pour éviter tout risque d'endommagement du câble ou analogue par traction excessive.

A cet égard, la commande du moteur à partir d'une information issue desdits moyens sensibles à la traction dans le câble ou analogue offre toute sécurité à l'encontre des tractions excessives, notamment en cas d'accélération importante et de vitesse élevée dans le déplacement relatif des deux zones que le câble ou analogue raccorde mutuellement.

La prévision des moyens de freinage unidirectionnel de l'arbre de sortie du moteur, lesquels peuvent naturellement agir indirectement sur cet arbre de sortie, et notamment par l'intermédiaire de la chaîne de liaison cinématique sans glissement, permet de faire débiter de l'énergie motrice au moteur non seulement lors de l'enroulement, cette énergie motrice étant alors utilisée pour entraîner le câble par l'intermédiaire du tambour sans entrave de la part de ces moyens de freinage unidirectionnel, mais également lors du déroulement, au cours duquel cette énergie motrice est fournie à ces moyens de freinage unidirectionnel ; ceci permet de disposer non seulement à l'enroulement mais également au déroulement d'une possibilité de régulation de la vitesse de rotation de l'arbre de sortie du moteur, compte tenu de la nature de ce moteur.

On observera que ces moyens de freinage ne prennent en aucune façon la forme de moyens introduisant un glissement entre l'arbre de sortie du moteur et le tambour, ce qui permet d'éliminer les inconvénients précités que présente une telle possibilité de glissement lorsque la longueur du câble ou analogue à enrouler et dérouler est importante et/ou que ce câble ou analogue pend du tambour sur une hauteur largement variable. En outre, les variations de la vitesse de rotation de l'arbre de sortie du moteur d'entraînement, commandées en fonction des informations issues des moyens sensibles à la traction dans le câble ou analogue, sont transmises immédiatement, fidèlement, au tambour dont la vitesse de rotation s'adapte ainsi pratiquement immédiatement, sans inertie, à la valeur nécessaire pour maintenir la traction dans le câble ou analogue à une valeur approximativement constante, même si, par exemple, le déplacement relatif des deux zones raccordées par le câble s'accélère brutalement ou s'effectue à vitesse élevée. La régulation du moteur asynchrone en variation de fréquence permet d'assurer à chaque instant une adaptation fine de la vitesse de rotation du tambour en fonction des besoins, dictés par le déplacement relatif des deux zones raccordées par le câble ou analogue, en maintenant une traction de valeur approximativement constante dans le câble ou analogue.

Outre le fait que leur présence permet d'assurer une régulation du moteur asynchrone en variation de fréquence dans les deux sens de rotation de son arbre de sortie, les moyens de freinage unidirectionnels de cet arbre de sortie offrent l'avantage de constituer une sécurité en cas d'interruption accidentelle de l'alimentation, en électricité, du moteur assurant l'entraînement du tambour à la rotation ainsi que des moteurs, également généralement électriques, assurant le déplacement relatif des deux zones entre lesquelles le câble ou analogue assure une liaison. En effet, si l'interruption de l'alimentation s'effectue en phase de rapprochement relatif desdites zones et, par conséquent d'enroulement du câble ou analogue, les moyens unidirectionnels de freinage ne s'opposent pas à ce que le tambour continue à tourner par inertie dans le sens de l'enroulement alors que les deux zones continuent à se rapprocher également par inertie, ce qui permet d'éviter dans toute la mesure du possible l'apparition d'un mou dans le câble ; si cette interruption de l'alimentation en électricité s'effectue dans une phase d'éloignement mutuel des deux zones précitées, c'est-à-dire du déroulement du câble, les moyens de freinage unidirectionnel assurent certes un freinage du tambour, tendant à s'opposer à ce que celui-ci continue à tourner par inertie dans le sens de déroulement pour compenser la poursuite de l'éloignement relatif des deux zones par inertie, mais cette action de freinage est calibrée et on peut la calibrer de telle sorte que dans de telles circonstances, elle n'entraîne pas de blocage du tambour et que la traction appliquée au câble reste inférieure à un seuil risquant de détériorer celui-ci, ce qui permet précisément d'éviter une telle détérioration.

Un dispositif selon l'invention peut cependant être réalisé de façon particulièrement simple, et par conséquent économique et fiable, notamment quant aux moyens pour exercer un freinage unidirectionnel, calibré, sur l'arbre de sortie du moteur d'entraînement du tambour.

Ainsi, selon un mode de réalisation particulièrement simple, ces moyens peuvent comporter :
- un arbre de freinage monté à la rotation autour d'un deuxième axe déterminé par rapport au support,
- des moyens de liaison cinématique permanente, sans glissement, entre l'arbre de freinage et l'arbre de sortie du moteur d'entraînement, de façon à associer aux sens d'enroulement et de déroulement des sens respectifs de rotation de l'arbre de freinage,
- un coupleur du type comportant deux parties mobiles à la rotation l'une par rapport à l'autre autour d'un axe, à l'encontre d'un couple résistant déterminé, une première desdites parties étant coaxiale à l'arbre de freinage et solidaire de celui-ci, et
- un mécanisme de roue libre raccordant la deuxième desdites parties au support en étant passant dans le sens de rotation de l'arbre de freinage correspondant au sens d'enroulement et bloquant dans le sens de rotation de l'arbre de freinage correspondant au sens de déroulement.

Naturellement, dans un tel cas, les moyens de freinage unidirectionnel absorbent de l'énergie, en provenance du moteur, et doivent dissiper cette énergie, par exemple sous forme d'énergie calorifique, pendant la totalité des phases de déroulement du câble.

Pour réduire cette absorption puis cette restitution d'énergie par les moyens de freinage unidirectionnel, on peut également prévoir, en variante, que ces derniers comportent :
- un arbre de freinage monté à la rotation autour d'un deuxième axe déterminé par rapport au support,
- des moyens de liaison cinématique permanente, sans glissement, entre l'arbre de freinage et l'arbre de sortie du moteur d'entraînement, de façon à associer aux sens d'enroulement et de déroulement des sens respectifs de rotation de l'arbre de freinage,
- un coupleur du type comportant deux parties mobiles à la rotation l'une par rapport à l'autre autour d'un axe, à l'encontre d'un couple résistant déterminé, une première desdites parties étant coaxiale à l'arbre de freinage et solidaire de celui-ci,
- un moteur électrique auxiliaire présentant un arbre rotatif de sortie coaxial à l'arbre de freinage et portant de façon coaxiale et solidaire la deuxième desdites parties,
- des moyens d'alimentation du moteur auxiliaire en électricité, commandés par les moyens de commande pour alimenter le moteur auxiliaire en électricité, de façon à faire tourner l'arbre de sortie de celui-ci dans un sens correspondant au sens d'enroulement, au moins pendant l'alimentation du moteur d'entraînement, par les moyens d'alimentation de celui-ci en électricité, de façon à faire tourner l'arbre de sortie du moteur d'entraînement dans un sens correspondant au sens d'enroulement, ou pour interrompre l'alimentation du moteur auxiliaire en électricité,
- un mécanisme de roue libre raccordant l'arbre de sortie du moteur auxiliaire au support en étant passant dans le sens de rotation de l'arbre de sortie du moteur auxiliaire correspondant au sens d'enroulement et bloquant dans le sens de rotation de l'arbre de sortie du moteur auxiliaire correspondant au sens de déroulement.

Le moteur d'entraînement et le moteur auxiliaire coopèrent alors, par l'intermédiaire du coupleur, lorsqu'il s'agit d'entraîner le tambour dans le sens d'enroulement, ce qui permet d'avoir recours à un moteur d'entraînement moins puissant ; il en résulte que l'énergie de freinage à opposer à la rotation de l'arbre de sortie de ce moteur d'entraînement lorsque le tambour doit être entraîné dans son sens de déroulement est également plus faible surtout si, comme il est préféré, on prévoit que les moyens de commande soient propres à interrompre l'alimentation du moteur auxiliaire par les moyens d'alimentation de celui-ci en électricité pendant l'arrêt de l'alimentation du moteur d'entraînement par les moyens d'alimentation de celui-ci en électricité et pendant l'alimentation du moteur d'entraînement, par les moyens d'alimentation de celui-ci en électricité, de façon à faire tourner l'arbre de sortie du moteur d'entraînement dans un sens correspondant au déroulement ; en comparaison avec une solution selon laquelle le moteur auxiliaire continuerait à être alimenté en électricité de telle sorte que son arbre de sortie tourne dans le sens d'entraînement, ceci permet de réduire considérablement le glissement dans le coupleur en phase de déroulement, c'est-à-dire de réduire également la quantité d'énergie à dissiper par l'intermédiaire de ce dernier, généralement sous forme d'énergie calorifique.

Différents types de coupleur peuvent être utilisés mais on préfèrera un coupleur magnétique à hystérésis, dont la simplicité, le faible coût et la fiabilité sont déjà bien connus d'un Homme du métier.

Les moyens sensibles à la traction dans le câble ou analogue peuvent également être réalisés de façon particulièrement simple, économique et fiable.

Ainsi, selon un mode de réalisation, ils peuvent comporter des moyens de captation de cette traction, placés mécaniquement en série avec le câble ou analogue entre les zones que celui-ci raccorde mutuellement. Ce peut être le cas, par exemple, lorsque le câble ou analogue est destiné à alimenter une charge, constituant l'une desdites zones, à partir d'un engin de levage, constituant l'autre desdites zones, et est disposé en parallèle à un lien souple assurant la suspension de la charge à l'engin de levage ; les moyens de captation peuvent alors assurer entre le câble ou analogue et le charge à la fois un raccordement mécanique, permettant de mesurer ladite traction, et un raccordement assurant le transport d'énergie entre le câble ou analogue et la charge, ou encore n'assurer que le raccordement mécanique entre le câble ou analogue et la charge ; à cet effet, les moyens de captation peuvent raccorder mécaniquement à la charge une zone du câble ou analogue proche de son raccordement à la charge, le câble ou analogue étant mis en boucle entre cette zone et son raccordement, propre à assurer le transport d'énergie, à la charge.

On peut également prévoir que les moyens, sensibles à ladite traction, comportent des moyens de déviation dudit câble ou analogue entre lesdites zones, portés par le support et susceptibles de s'effacer de façon réversible sous l'effet de ladite traction, et des moyens de captation de la position desdits moyens de déviation.

On remarquera que des moyens de déviation du câble ou analogue peuvent être prévus dans toute application du dispositif d'enroulement et de déroulement selon l'invention, et sont de toute façon prévus dans de nombreuses applications telles que l'alimentation électrique, à partir du sol, d'un engin roulant sur celui-ci.

Les moyens de captation de la traction dans le câble peuvent par ailleurs connaître de nombreux modes de réalisation, dont la conception relève des aptitudes normales d'un Homme du métier, pour permettre une régulation de l'alimentation du moteur d'entraînement soit de façon à compenser aussitôt la moindre variation dans la valeur de la traction dans le câble, et maintenir ainsi cette valeur aussi rigoureusement constante que possible, soit, de façon beaucoup plus simple tout en étant largement admissible, de façon à maintenir la valeur de la traction dans le câble entre des valeurs de consigne convenablement choisies pour éviter à la fois les tractions excessives dans le câble ou analogue et les mous de celui-ci.

Ainsi, selon un mode de réalisation préféré, les moyens, sensibles à ladite traction, comportent des moyens pour délivrer un signal de valeur représentative de la valeur de ladite traction, des moyens pour fixer des valeurs de consigne audit signal, correspondant à des valeurs respectivement maximale et minimale, admissibles de ladite traction, des moyens pour comparer la valeur du signal aux valeurs de consigne et délivrer un signal représentatif du résultat de cette comparaison, et des moyens pour piloter en fonction de ce signal l'alimentation du moteur d'entraînement par les moyens d'alimentation de celui-ci en électricité, de façon à maintenir la valeur réelle de la traction entre les valeurs de consigne.

Selon un autre aspect préféré de la présente invention, on prévoit des moyens de commande asservie du sens de rotation et de la vitesse de rotation du moteur asynchrone qui sont basés exclusivement sur l'information de traction réelle dans le câble ou analogue, et qui sont capables d'assurer cette commande asservie d'une façon particulièrement efficace et bien adaptée au dispositif d'enroulement/déroulement selon l'invention.

D'autres caractéristiques et avantages d'un dispositif selon l'invention ressortiront de la description ci-dessous, relative à quelques exemples non limitatifs de réalisation, ainsi que des dessins annexés qui font partie intégrante de cette description.
- Les figures 1 à 3 illustrent trois applications d'un dispositif d'enroulement et de déroulement selon l'invention, en des vues schématiques, en élévation latérale.
- La figure 4 montre une vue, en coupe axiale, le mode de réalisation des moyens de freinage unidirectionnels, calibrés, équipant le dispositif selon l'invention dans ces différentes applications.
- La figure 5 montre, en une vue analogue à celle de la figure 4, un autre mode de réalisation des moyens de freinage unidirectionnels, calibrés.
- La figure 6 est un schéma électrique préféré d'une partie de moyens de commande asservie du moteur d'entraînement d'un dispositif selon l'invention.

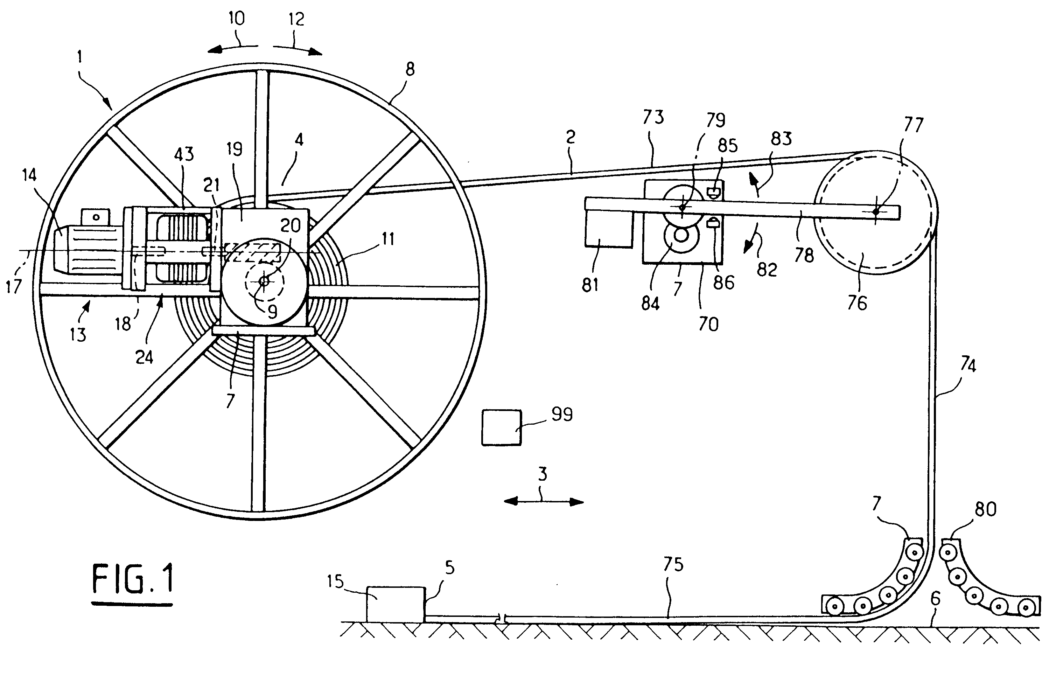

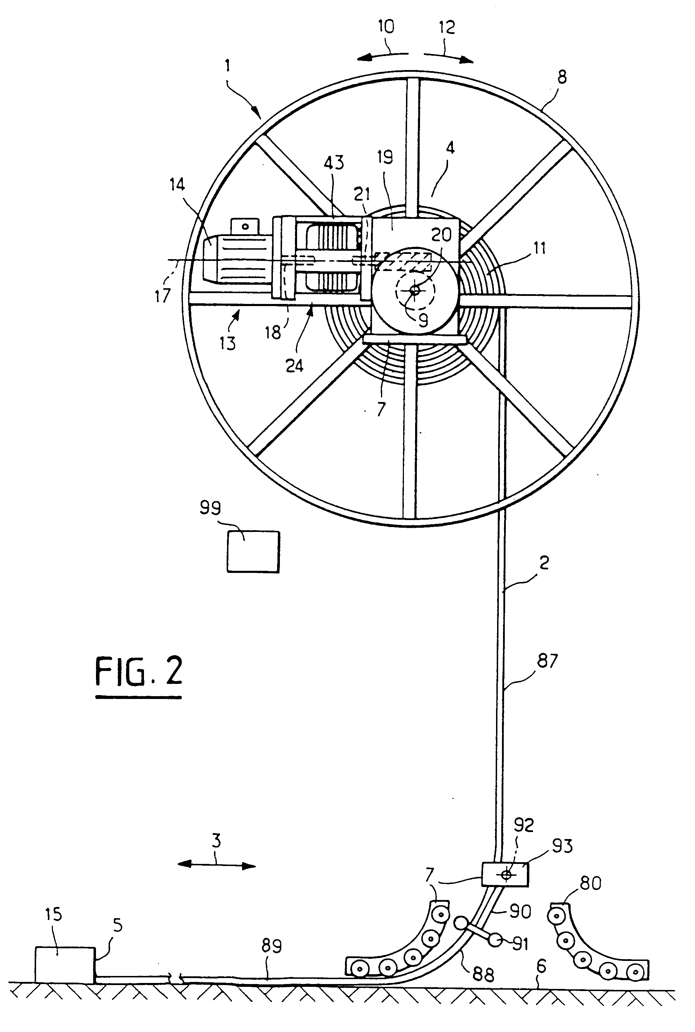

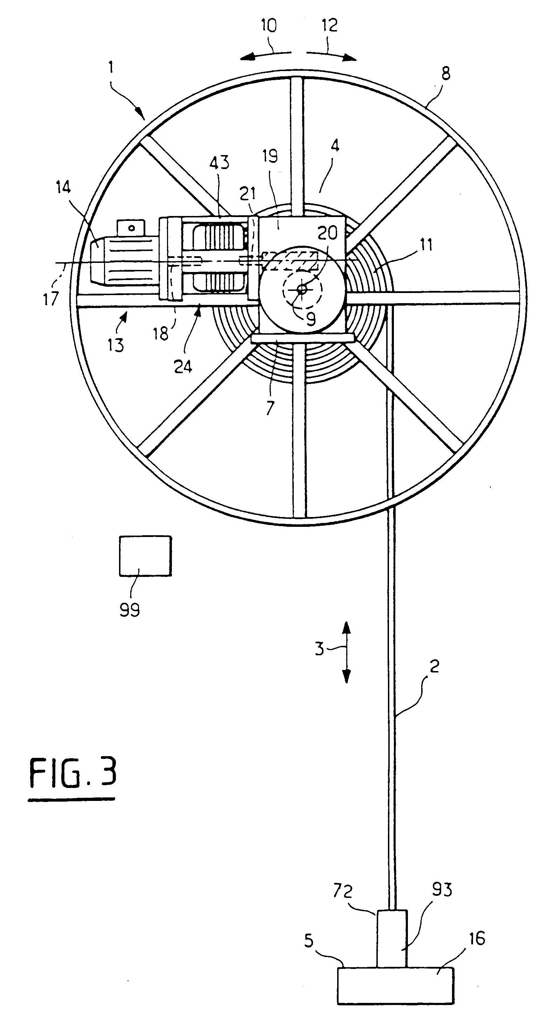

On se réfèrera en premier lieu aux figures 1 à 3, où l'on a désigné par 1 un dispositif selon l'invention, utilisé pour enrouler ou dérouler un câble électrique 2, au fur et à mesure d'un déplacement relatif 3, par exemple horizontal aux figures 1 et 2 et vertical à la figure 3, de deux zones 4, 5 dont la première est constituée par un engin à traction électrique roulant sur un sol par exemple horizontal 6 et la deuxième par un boîtier 15, fixe par rapport au sol 6, d'alimentation de cet engin en électricité par l'intermédiaire du câble 2 dans le cas des applications illustrées aux figures 1 et 2 alors que, dans le cas de l'application illustrée à la figure 3, la première de ces zones est constituée par un engin de levage non représenté et la deuxième par une charge 16 suspendue à cet engin de levage par des moyens également non représentés, tels qu'un câble de suspension ou analogue, et raccordée à l'engin, indépendamment de cette suspension, par le câble 2 qui sert à alimenter la charge 16, telle qu'un électro-aimant de levage ou une benne preneuse électro-hydraulique, en électricité à partir de l'engin ; dans l'application des figures 1 et 2, le dispositif selon l'invention 1 est destiné à enrouler ou dérouler du câble 2 en fonction des variations de longueur de la trajectoire que celui-ci accomplit entre les zones 4 et 5 lors des déplacements de l'engin sur le sol alors que dans le cas de la figure 3, le dispositif selon l'invention 1 a pour rôle d'enrouler ou dérouler du câble 2 en fonction du levage ou de la descente de la charge 5.

Naturellement, le câble électrique 2 ne constitue qu'un exemple non limitatif de câble de transport d'énergie, ou analogue, susceptible d'être enroulé ou déroulé au moyen d'un dispositif selon l'invention 1.

Dans les trois applications illustrées, le dispositif selon l'invention 1 est porté, comme il est connu de façon générale, par un support 7 placé dans la zone 4, c'est-à-dire solidaire de l'engin non représenté.

De façon également connue, ce dispositif 1 comporte un tambour 8 monté à la rotation par rapport au support 7 autour d'un axe déterminé 9, généralement horizontal, de façon à pouvoir tourner par rapport au support 7, autour de cet axe 9, soit dans un sens 10 d'enroulement du câble 2 par exemple en spirale 11 sur le tambour 8, si la trajectoire du câble 2 entre les zones 4 et 5 se raccourcit, soit dans un sens 12 de déroulement du câble 2, si cette trajectoire s'allonge.

Conformément à la présente invention, la rotation du tambour 8, autour de l'axe 9, par rapport au support 7 est provoquée non seulement dans le sens d'enroulement 10 mais également dans le sens de déroulement 12 par des moyens 13 d'entraînement du tambour 8, lesquels sont portés de façon solidaire par le support 7.

Ces moyens 13 comportent notamment un moteur électrique 14 qui, conformément à la présente invention, est de type asynchrone, alimenté en courant alternatif par des moyens appropriés avantageusement constitués par le boîtier de raccordement électrique 15 placé au sol 6, par l'intermédiaire du câble 2 et d'un collecteur non illustré, disposé autour de l'axe 9, dans les applications illustrées aux figures 1 et 2, et par des moyens généralement analogues non représentés dans l'application de la figure 3.

Le moteur 14 présente, suivant un axe 17 fixe par rapport au support et par exemple horizontal et situé dans un plan non illustré perpendiculaire à l'axe 9, un arbre de sortie 18 qu'une alimentation électrique appropriée du moteur 14, commandée par l'intermédiaire de moyens de commande 99 généralement couplés aux moyens de commande non représentés du déplacement de l'engin si l'on se réfère à l'application des figures 1 et 2 et aux moyens de commande également non représentés du levage et de la descente de la charge si l'on se réfère à l'application de la figure 3, avec asservissement à la traction que subit le câble 2 entre les zones 4 et 5 pour maintenir cette traction à une valeur approximativement constante, de façon caractéristique de la présente invention, permet d'entraîner soit dans un sens non référencé correspondant à une rotation du tambour 8 dans le sens d'enroulement 10, soit dans le sens opposé, correspondant à une rotation du tambour 8 dans le sens du déroulement 12, à une vitesse variable modulée en fonction dudit maintien d'une traction approximativement constante sur le câble 2, au fur et à mesure du déplacement relatif des zones 4 et 5, et permet en outre d'arrêter lorsque ce déplacement relatif cesse.

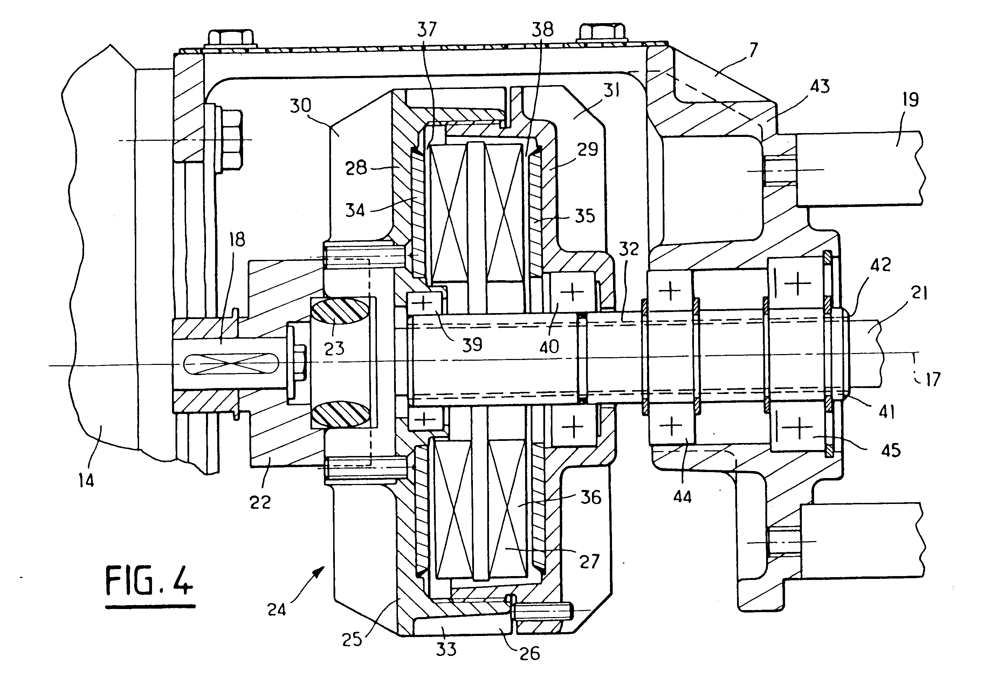

A cet effet, l'arbre de sortie 18 du moteur 14 est placé en permanence en relation d'entraînement dans les deux sens avec le tambour 8, par l'intermédiaire d'une chaîne de liaison cinématique n'autorisant pas de glissement et comportant par exemple un réducteur à engrenage 19 comportant un arbre de sortie 20 disposé suivant l'axe 9, monté à la rotation autour de celui-ci à l'intérieur du support 7 et solidaire du tambour 8 notamment vis-à-vis d'une rotation dans les deux sens 10 et 12, et un arbre d'entrée 21 qui, comme le montre la figure 4, prolonge coaxialement l'arbre de sortie 18 du moteur 14, est monté à la rotation autour de l'axe 17 par rapport au support 7, par l'intermédiaire de moyens non représentés, et se raccorde à l'arbre de sortie 18 du moteur 14 par l'intermédiaire d'un accouplement 22 assurant une solidarisation mutuelle à la rotation dans l'un ou l'autre sens autour de l'axe 17, par exemple d'un accouplement à crabot mettant en oeuvre une interpénétration de dents parallèles à l'axe 17, entrant en prise circonférentielle, en référence à cet axe 17, par l'intermédiaire d'excroissances radiales d'un anneau d'un matériau élastiquement compressible 23, comme il est bien connu d'un Homme du métier.

L'arbre 21 constitue non seulement l'arbre d'entrée du réducteur 19 mais également un moyen permettant d'exercer sur l'arbre de sortie 18 du moteur 14 un freinage unidirectionnel, calibré, dans le sens de rotation de cet arbre de sortie 18 correspondant au sens de rotation 12 du tambour 8, c'est-à-dire au sens de déroulement, alors que ce freinage disparaît lorsque l'arbre de sortie 18 tourne en sens opposé, correspondant au sens 10 du tambour 8, c'est-à-dire au sens d'enroulement.

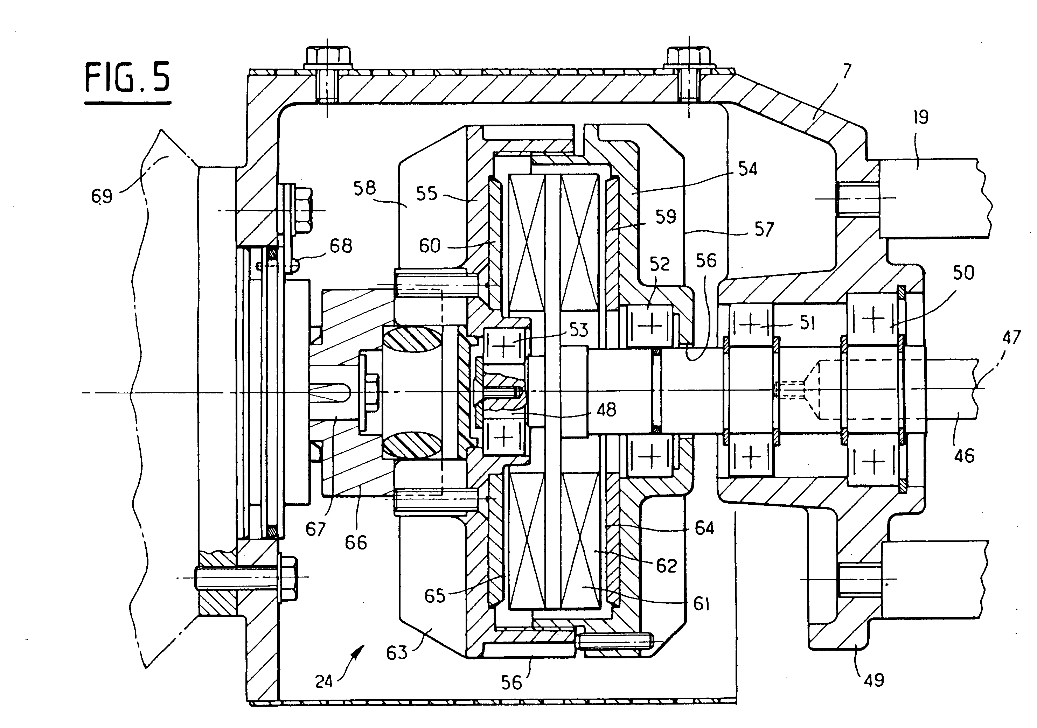

A cet effet sont prévus des moyens 24 disposés autour de l'arbre 21, entre le moteur 14 et le réducteur 19 dans l'exemple de mise en oeuvre de l'invention illustré aux figures 1 et 3 ainsi qu'à la figure 4, mais pouvant être disposés différemment comme on le décrira à titre d'exemple non limitatif en référence à la figure 5.

On se réfèrera en premier lieu à la figure 4 d'où il ressort qu'à proximité immédiate de l'accouplement 22, l'arbre 21 porte de façon solidaire, coaxialement, autour de lui, une partie 25 d'un coupleur 26 d'un type comportant en outre une autre partie 27 disposée coaxialement à la partie 25, ces deux parties 25 et 27 pouvant tourner l'une par rapport à l'autre autour de leur axe commun constitué par l'axe 17, à l'encontre d'un couple résistant déterminé.

Le coupleur 26 illustré à la figure 4 est un coupleur magnétique à hystérésis dont les parties 25 et 27 sont constituées respectivement par un induit et par un inducteur, mais on ne sortirait pas du cadre de la présente invention en utilisant d'autres types de coupleurs autorisant un glissement entre leurs deux parties 25, 27, à la rotation relative autour de l'axe commun 17, en opposant un couple résistant déterminé à une telle rotation relative de ces deux parties.

La partie 25, solidaire de l'arbre 21, comporte un assemblage solidaire de deux flasques 28, 29 dont chacun présente une forme générale annulaire de révolution autour de l'axe 17 si ce n'est que chacun d'entre eux présente des ailettes 30, 31 de refroidissement, compte tenu de ce que la partie 25 constitue dans l'exemple illustré un induit, soumis à un échauffement important lorsque les deux parties 25 et 27 tournent l'une par rapport à l'autre. Le flasque 28 est raccordé de façon solidaire par tout moyen approprié, et par exemple par vissage, à l'arbre 21 à proximité immédiate de l'accouplement 22 et ses ailettes 30 sont tournées vers le moteur 14 alors que le flasque 29 est disposé autour de l'arbre 21, vis-à-vis duquel il respecte un jeu annulaire continu 32, de révolution autour de l'axe 17, entre le flasque 28 et le réducteur 19 vers lequel il présente ses ailettes 31 ; le flasque 29 n'est supporté par l'arbre 21 que par l'intermédiaire du flasque 28, ces deux flasques 28 et 29 étant raccordés de façon solidaire bien que réglable en position relative, parallèlement à l'axe 17, dans une zone périphérique extérieure 33 de la partie 25, par des moyens connus d'un Homme du métier.

L'un vers l'autre, entre cette zone périphérique extérieure 33 et l'arbre 21, les flasques 28, 29 portent de façon solidaire des aimants permanents respectifs 34, 35, disposés de façon connue d'un Homme du métier.

Entre ces aimants permanents 34, 35 est disposée la partie 27 qui porte de façon solidaire des aimants permanents inducteurs 36 disposés de façon connue d'un Homme du métier et respectant vis-à-vis des aimants permanents 34 et 35 des flasques 28 et 29 des entrefers respectifs 37, 38, réglables par réglage de la position relative des flasques 28 et 29 parallèlement à l'axe 17 comme il est également connu d'un Homme du métier.

La partie 27 formant inducteur est ainsi disposée coaxialement autour de l'arbre 21 par rapport auquel, toutefois, il est nécessaire qu'elle puisse tourner autour de l'axe 17 afin de pouvoir tourner par rapport à la partie 25.

A cet effet, par l'intermédiaire de roulements respectifs 39, 40 disposés entre les aimants permanents 34, 35 et l'arbre 21, les flasques 28 et 29 portent, à la rotation relative autour de l'arbre 21, un arbre creux 41 qui respecte vis-à-vis de l'arbre 21 un jeu annulaire, continu 42 autorisant leur libre rotation relative et porte la partie 27 de façon solidaire entre les deux roulements 39 et 40. Les arbres 21 et 41 sont immobilisés par tout moyen approprié à l'encontre d'une translation relative axiale, ce qui assure un positionnement relatif déterminé aux parties 25 et 27 du coupleur 26.

Parallèlement à l'axe 17, l'arbre creux 41 s'étend vers l'accouplement 22 jusqu'à proximité de celui-ci, avec lequel il n'entre pas en contact, alors que dans le sens d'un éloignement par rapport à cet accouplement 22, il traverse le flasque 29 par l'intermédiaire du jeu annulaire 32, qui évite tout contact mutuel, pour s'étendre jusqu'à proximité du réducteur 19 avec lequel il n'entre toutefois pas non plus en contact.

Entre le flasque 29 et le réducteur 19, l'arbre creux 41 est guidé à la rotation autour de l'axe 17 par rapport au support 7, et plus précisément par rapport à une cloche 43 qui raccorde solidairement le moteur 14 au réducteur 19 en entourant l'arbre creux 41 entre le flasque 29 et le réducteur 19, par l'intermédiaire de deux roulements 44, 45 qui sont interposés entre l'arbre creux 41 et la cloche 43 et dont l'un, à savoir le roulement 45, présente la caractéristique de constituer un dispositif de roue libre passant dans le sens de rotation conjointe de l'arbre 21 et de l'arbre de sortie 18 du moteur 14 correspondant au sens d'enroulement 10 du tambour 8, afin d'autoriser une rotation conjointe, sans entrave, des deux parties 25 et 27 du coupleur 26 avec l'arbre 21 et l'arbre de sortie 18 dans ce sens, alors que ce dispositif de roue libre est bloquant dans le sens de rotation conjointe de l'arbre 21 et de l'arbre de sortie 18 du moteur 14 correspondant au sens de déroulement 12 pour s'opposer à ce que, lors d'une rotation de l'arbre 21 et de l'arbre de sortie 18 dans ce sens, la partie 27 accompagne librement la rotation de la partie 25 et provoquer ainsi l'apparition entre les deux parties 27 et 25, respectivement immobilisée par rapport au support 7 et entraînée à la rotation autour de l'axe 17 par rapport à celui-ci, conjointement avec l'arbre 21 et avec l'arbre de sortie 18, le couple résistant précité, déterminé.

La présence du coupleur 26 permet ainsi de conserver un couple résistant, tendant à s'opposer à la rotation conjointe des arbres 21 et 18, lors du déroulement du câble et par conséquent d'alimenter alors le moteur 14 en électricité de même que lorsqu'il s'agit d'enrouler le câble 2, et permet ainsi d'assurer une régulation en variation de fréquence de façon à accorder la vitesse de rotation de son arbre de sortie 18 autour de l'axe 17 de telle sorte qu'il s'ensuive, du fait de l'entraînement du tambour 8, une traction de valeur approximativement constante dans le câble 2, non seulement lors de l'enroulement de celui-ci mais également lors de son déroulement, par des moyens qui seront décrits plus loin.

Naturellement, bien qu'un positionnement des moyens de freinage unidirectionnel 24 entre le moteur 14 et le réducteur 19 soit généralement avantageux en termes d'encombrement, on peut également prévoir d'autres positionnements de ces moyens de freinage unidirectionnels 24, et on a précisément illustré un tel autre positionnement à la figure 5 à laquelle on se réfèrera à présent.

Dans ce cas, le moteur 14 peut être directement juxtaposé au réducteur 19, par raccourcissement de l'arbre d'entrée 21 de celui-ci, et les moyens de freinage unidirectionnel 24 être conçus et disposés pour agir sur un arbre quelconque 46, monté à la rotation par rapport au support 7 autour d'un axe 47 et lié cinématiquement, directement ou indirectement, mais sans glissement, à l'arbre de sortie 18 du moteur 14 de façon à tourner respectivement dans l'un ou l'autre de deux sens déterminés selon que l'arbre de sortie 18 du moteur 14 tourne dans son sens correspondant au sens d'enroulement 10 du tambour 8 ou au sens de déroulement 12 de celui-ci.

L'arbre 46 peut ainsi se confondre avec l'arbre 20 du tambour 8 ou, de préférence, constituer un prolongement de l'arbre 21 du réducteur 19 à l'opposé du moteur 14.

Dans cet exemple, les moyens de freinage unidirectionnel 24 sont disposés autour d'une extrémité 48 de l'arbre 46, en porte-à-faux suivant l'axe 47 hors du réducteur 19, à l'intérieur d'une cloche 49 analogue à la cloche 43 et, comme celle-ci, montée sur le réducteur 19 de façon à former partie intégrante et fixe du support 7.

L'arbre 46 pénètre dans cette cloche 49, à proximité immédiate du réducteur 19, par l'intermédiaire de deux roulements 50, 51 qui sont disposés par rapport à la face 49 respectivement comme les roulements 45 et 44 par rapport à la cloche 43 mais qui assurent simplement un guidage de l'arbre 46 à la rotation autour de l'axe 47 par rapport à la cloche 49 sans qu'aucun de ces deux roulements ne constitue en outre un système de roue libre comme c'est le cas du roulement 45.

En outre, entre le roulement 51 et son extrémité 48, respectivement à proximité du roulement 51 et à proximité de cette extrémité 48, l'arbre 46 porte deux roulements 52, 53 disposés respectivement comme le roulement 40 et comme le roulement 39 et servant au montage respectif, à la rotation par rapport à l'arbre 46 autour de l'axe 47, de flasques 54, 55, identiques aux flasques 29 et 28 respectivement, d'un coupleur 56 comportant deux parties 61, 63 susceptibles de tourner l'une par rapport à l'autre autour de l'axe 47 en opposant à cette rotation un couple déterminé ; ce coupleur 56 est en tout point identique au coupleur 26, c'est-à-dire de type magnétique à hystérésis, dont les parties 61 et 63 constituent respectivement l'inducteur et l'induit, dans l'exemple non limitatif illustré.

On se réfèrera à la description, ci-dessus, des flasques 28 et 29 en ce qui concerne les flasques 54 et 55, en observant que le flasque 54 présente vis-à-vis de l'arbre 46 un jeu annulaire, continu 56 analogue au jeu 32, et destiné à éviter un contact entre le flasque 54 et l'arbre 46 ; de même, le flasque 55 est conçu de façon à ne pas entrer en contact avec l'arbre 46, si bien qu'à la différence de l'arbre 21 qui lui correspond dans l'exemple des figures 1 à 4, cet arbre 46 est libre à la rotation autour de l'axe 47 par rapport à l'induit 63 du coupleur 56, constitué par l'ensemble solidaire formé par les flasques 54 et 55 assemblés mutuellement comme on l'a dit des flasques 34 et 35 et présentant comme ces derniers d'une part des ailettes de refroidissement 57, 58 tournées vers l'extérieur et d'autre part des aimants permanents 59, 60 tournés vers l'intérieur ; l'arbre 46 porte de façon solidaire l'inducteur 61 du coupleur 56, constitué par des aimants permanents 62 disposés entre les aimants permanents 59, 60 en respectant vis-à-vis de ces derniers un entrefer 64, 65 réglable par réglage de l'écartement mutuel des flasques 54, 55 parallèlement à l'axe 47. Tout moyen approprié est prévu pour immobiliser l'arbre 46 d'une part, l'ensemble des deux flasques 54 et 55, d'autre part, à l'encontre d'une translation axiale relative.

En porte-à-faux par rapport à l'extrémité 48 de l'arbre 46 suivant l'axe 47, le flasque 55 se raccorde de façon solidaire à la rotation autour de l'axe 47, par l'intermédiaire d'un accouplement 66, à un arbre 67 qui prolonge coaxialement l'arbre 46 et est monté à la rotation autour de l'arbre 47 dans la cloche 49, par l'intermédiaire d'un dispositif de roue libre 68 qui, comme le dispositif de roue libre 45, est passant dans un sens de rotation conjointe des arbres 67 et 46 correspondant au sens d'enroulement 10 du tambour 8, alors que ce système de roue libre est bloquant en sens opposé, c'est-à-dire dans un sens de rotation des arbres 67 et 46 autour de l'axe 47 correspondant au sens de déroulement 12 du tambour 8.

Dans ces conditions, lorsque l'arbre de sortie 18 du moteur 14, non représenté sur ces figures, tourne autour de son axe dans un sens tel qu'il s'ensuive une rotation du tambour 8 dans le sens d'enroulement 10, le dispositif de roue libre 68 n'oppose aucune entrave à ce que l'induit 63 du coupleur 56 tourne à l'unisson avec l'inducteur 61 de celui-ci, si bien que la présence des moyens de freinage unidirectionnel 24 ne se traduit alors par aucune surcharge pour le moteur 14. Lorsque, par contre, l'arbre de sortie 18 de ce dernier tourne dans un sens correspondant au sens de déroulement 12 du tambour 8, le dispositif de roue libre 68 immobilise l'induit 63 vis-à-vis d'une rotation conjointe avec l'inducteur 61 autour de l'axe 47, si bien que le coupleur 56 oppose un couple résistant, constant, à la rotation de l'arbre 46 autour de son axe 47 et par conséquent à la rotation de l'arbre de sortie 18 du moteur 14 ; en d'autres termes, le montage illustré à la figure 5 aboutit au même résultat que celui qui est illustré aux figures 1 à 4.

Dans une variante de réalisation de l'exemple de la figure 5, schématisée en trait mixte sur cette figure, l'arbre 67, monté à la rotation dans la cloche 49 par l'intermédiaire du dispositif de roue libre 68, constitue l'arbre de sortie d'un moteur auxiliaire 69, porté de façon solidaire par la cloche 49 dans la position qu'occupe le moteur 14 dans l'exemple des figures 1 à 4.

A la différence du moteur 14, dont la vitesse et le sens de rotation de l'arbre de sortie 18 peuvent varier et que l'on choisit à cet effet de type asynchrone, le moteur 69 est choisi et/ou alimenté en électricité par exemple par l'intermédiaire du câble 2 et d'un collecteur non représenté, coaxial du tambour 8, à partir du boîtier de raccordement 15, de façon commandée par les moyens de commande 99, de telle sorte que son arbre de sortie 67 tourne autour de l'axe 47 à vitesse constante, bien qu'éventuellement variable, et dans un sens correspondant au sens de rotation de l'arbre 46 autour de l'axe 47 correspondant lui-même au sens d'enroulement 12 au moins tant que le moteur 14 est alimenté en électricité, sous la commande des moyens 19, de telle sorte que son arbre de sortie 18 tourne lui-même, autour de son axe 17, dans un sens correspondant au sens d'enroulement 12. Par contre, la commande du moteur 69 est de préférence telle que son arbre 67 soit arrêté lorsque le moteur 14 est alimenté de telle sorte que son arbre de sortie 18 tourne dans un sens correspondant au sens de déroulement 12 de même que lorsque le moteur 14 est arrêté par interruption de son alimentation en électricité.

Ainsi, le moteur 69 contribue à l'entraînement du tambour 8 dans le sens d'enroulement 10, ce qui permet de prévoir un moteur 14 moins puissant que dans l'exemple des figures 1 à 4, et l'énergie à dissiper au niveau du coupleur 56, sous forme d'énergie calorifique, lorsque le tambour 8 tourne dans le sens de déroulement 12 est moindre. On pourrait admettre que l'arbre de sortie 67 du moteur 69 continue à tourner dans un sens correspondant au sens d'enroulement 10 lorsque le moteur 14 entraîne le tambour 8 dans le sens de déroulement 12, mais il en résulterait un glissement supérieur entre l'inducteur 61 et l'induit 63 du coupleur 56 c'est-à-dire une production supérieure d'énergie calorifique à évacuer.

Le moteur 69 est par exemple constitué par un moteur asynchrone.

Naturellement, d'autres montages des moyens de freinage unidirectionnels, calibrés, pourraient être prévus sans que l'on sorte pour autant du cadre de la présente invention.

Quel que soit le montage adopté, le moteur 14 assurant l'entraînement du tambour 8 à la rotation autour de son axe 9 par rapport au support 7 dans le sens d'enroulement 10 ou dans le sens de déroulement 12 est régulé en variation de fréquence de son alimentation en électricité, par action des moyens de commande 19, de façon à maintenir dans le câble 2 une traction de valeur approximativement constante à l'enroulement comme au déroulement du câble 2.

A cet effet sont prévus des moyens sensibles à cette traction, délivrant aux moyens de commande 19 un signal représentatif de la valeur réelle de cette traction à chaque instant ou un signal représentatif du résultat d'une comparaison entre cette valeur réelle à chaque instant et des valeurs limites, respectivement minimale et maximale, de consigne.

On a illustré aux figures 1 à 3 trois exemples de réalisation de tels moyens sensibles à la traction dans le câble 2, référencés respectivement 70, 71, 72, étant entendu que le choix de ces moyens est indépendant de celui du positionnement et de la nature des moyens 24 de freinage unidirectionnel, calibré, par rapport à l'arbre de sortie 18 du moteur 14 d'entraînement du tambour 8 ou à un arbre solidaire de cet arbre 18 vis-à-vis d'une rotation dans les deux sens.

Dans l'exemple illustré à la figure 1, le câble 2 suit entre les zones 4 et 5 une trajectoire comportant successivement, de la zone 4 vers la zone 5, un tronçon 73 approximativement horizontal entre la spirale 11 d'enroulement sur le tambour 8 et une poulie de renvoi 76 montée à la rotation autour d'un axe 77, parallèle à l'axe 9, sur un bras 78 lui-même monté au pivotement limité, sur le support 7, autour d'un axe 79 parallèle à l'axe 9, un tronçon 74 approximativement vertical entre la poulie de renvoi 76 et une lyre 80 de guidage du câble 2 située à proximité immédiate du sol 6 et solidaire du support 7, et un tronçon 75 longeant le sol 6, c'est-à-dire approximativement horizontal, entre la lyre 80 et le boîtier de raccordement électrique 15 matérialisant la zone 5, solidaire du sol 6.

A l'opposé de l'axe 77 portant la poulie de renvoi 76 par rapport à l'axe 79, le bras 78 porte de façon solidaire un contre-poids 81 de préférence réglable en écartement vis-à-vis de l'axe 79, de telle sorte que l'on puisse équilibrer au moyen du contrepoids 81 une traction de valeur réglable mais considérée comme normale, dans le câble 2, et qu'une variation de la valeur de la traction provoque un pivotement du levier 78, autour de l'axe 79, dans un sens 82 correspondant à une descente de la poulie de renvoi 76 si la valeur effective de la traction dans le câble 2 devient supérieure à cette valeur considérée comme normale, et dans un sens 83 ascendant en ce qui concerne la poulie de renvoi 76 si la valeur effective de cette traction descend en dessous de la valeur considérée comme normale.

Ainsi, l'orientation du bras 78 autour de l'axe 79 par rapport au support 7 est caractéristique de la valeur effective de la traction dans le câble 2 et des moyens capteurs de cette position peuvent être utilisés pour émettre un signal représentatif, transmis aux moyens de commande 99 en vue de la régulation du moteur 14.

Ces moyens peuvent présenter la forme d'un potentiomètre tournant, porté par le support 7 à proximité de l'axe 79 et lié cinématiquement au bras 78 de façon à délivrer un signal représentatif de l'orientation de ce bras 78 et par conséquent de la traction effective dans le câble 2, ce signal étant acheminé aux moyens de commande 99 où sa valeur est comparée à des valeurs de consigne correspondant respectivement à une valeur maximale admissible de la traction dans le câble 2 et une valeur minimale admissible de cette traction, afin de former un signal représentatif du résultat de cette comparaison et de commander automatiquement le moteur 14 en variation de fréquence, c'est-à-dire en vitesse de rotation de son arbre de sortie, de façon à tendre à rétablir dans le câble 2 une traction de valeur admissible, c'est-à-dire située entre les valeurs maximale et minimale de consigne.

En considérant que la rotation du bras 78 autour de l'axe 79 par rapport au support 7 constitue, par sa valeur, un signal de déplacement, représentatif de la valeur effective de la tension dans le câble 2, on peut également remplacer le potentiomètre 84 par deux détecteurs de fin de course 85, 86 portés par le support 7 respectivement au-dessus et au-dessous du bras 78, par exemple entre l'axe 79 et la poulie 76, de telle sorte que l'excitation de l'un ou l'autre de ces détecteurs de fin de course par le bras 78 signifie l'atteinte d'une valeur limite de consigne respective du déplacement du bras 78 par rapport au support 7 sous l'action de la traction dans le câble 2, c'est-à-dire l'atteinte par la valeur effective de cette traction d'une valeur minimale de consigne ou d'une valeur maximale de consigne. Dans ce cas, l'actionnement du détecteur de fin de course 85 ou celui du détecteur de fin de course 86, détecté au niveau de la commande 19, provoque une correction automatique de la vitesse de rotation de l'arbre 18 du moteur 14 de façon à ramener la traction dans le câble 2 à une valeur intermédiaire entre les valeurs de consigne précitées, c'est-à-dire le bras 78 à une orientation telle qu'aucun des deux détecteurs 85 et 86 ne soit actionné.

La figure 2 illustre un exemple selon lequel le câble 2 pend librement, de façon générale verticalement, à partir de l'enroulement par exemple en spirale sur le tambour 8, jusqu'à une lyre 80 disposée à proximité immédiate du sol 6 et solidaire du support 7. Le câble 2 suit ainsi une trajectoire comportant, à partir de l'enroulement en spirale sur le tambour 8, un tronçon 87 pour l'essentiel rectiligne et vertical, un tronçon incurvé 88 au franchissement de la lyre 80 et un tronçon 89 longeant le sol 6, approximativement horizontal, entre la lyre 80 et le boîtier de raccordement électrique 15.

Dans cet exemple, la détection de la valeur effective de la traction dans le câble 2 s'effectue au moyen d'un balancier 90 présentant à l'intérieur de la lyre 80 un oeillet 91 dans lequel le câble 2 est engagé au niveau du tronçon incurvé 88 de sa trajectoire.

L'oeillet 91 est ainsi suspendu par l'intermédiaire du balancier 90 à un boîtier 93 solidaire du support 7 et par rapport auquel le balancier 90 peut pivoter autour d'un axe 92 horizontal et perpendiculaire à la direction 3 de déplacement.

En fonction de la traction appliquée au câble 87, la géométrie du tronçon incurvé 88 de la trajectoire de celui-ci se modifie; plus précisément, plus la traction dans le câble 2 est élevée, et plus le tronçon 88 a tendance à se tendre, si bien que le câble 2 applique à l'oeillet 91 une sollicitation vers la zone 5, faisant ainsi basculer le balancier 90 comme on l'a illustré à la figure 2 ; plus la tension dans le câble 2 est faible, et plus le tronçon 87 a tendance à parvenir près du sol 6, le tronçon 88 se détendant alors et le câble 2 ne sollicitant plus ou pratiquement plus l'oeillet 91 si bien que le balancier 90 a tendance à pendre à la verticale de l'axe 92.

Des capteurs non illustrés, mais qui peuvent être analogues aux détecteurs de fin de course 85 et 86 précédemment décrits, disposés à l'intérieur du boîtier 93, peuvent détecter deux orientations limites du balancier 90 autour de l'axe 92 par rapport au boîtier 91, correspondant respectivement à une valeur maximale de consigne de la traction dans le câble 2 et à une valeur minimale de consigne de cette traction, l'excitation de l'un ou l'autre de ces capteurs se traduisant par l'émission et l'envoi, aux moyens de commande 99, d'un signal provoquant une modification appropriée de la vitesse de rotation de l'arbre de sortie 18 du moteur 14. Naturellement, on pourrait également utiliser dans ce cas, pour fournir un signal représentatif de la valeur de la traction dans le câble 2, un potentiomètre analogue au potentiomètre 84, délivrant un signal représentatif de l'orientation du balancier 90.

On remarquera que dans le cas de la figure 2 comme dans celui de la figure 1, la détection de la valeur de la traction dans le câble 2 est effectuée par l'intermédiaire d'un moyen mécanique de déviation de ce câble 2, à savoir respectivement la poulie de renvoi 76 et l'oeillet 91, susceptible de s'effacer plus ou moins selon que la valeur de cette traction est plus ou moins grande, et muni de moyens de captation de ses positions sous la forme du potentiomètre 84 ou des détecteurs 85 et 86 de fin de course du levier 78 dans le cas de la figure 1, ou sous la forme d'un potentiomètre correspondant au potentiomètre 84 ou détecteurs de fin de course du balancier 90, correspondant aux détecteurs de fin de course 85 et 86, dans le cas de la figure 2.

Ces deux figures correspondent à l'application d'un dispositif d'enroulement et de déroulement selon l'invention à l'alimentation d'un engin mobile par rapport au sol, et plus particulièrement par rapport à un boîtier de raccordement électrique 15 porté de façon solidaire par ce sol 6 et constituant une source d'alimentation de l'engin considéré en électricité, mais des moyens analogues, par exemple inspirés de ceux qui sont illustrés à la figure 1, pourraient être utilisés lorsque, comme le montre la figure 3, un dispositif selon l'invention est utilisé pour alimenter en électricité une charge 16 suspendue à un engin de levage.

Toutefois, dans un tel cas, on peut également prévoir d'assurer une captation directe de la traction dans le câble 2 par des moyens 72, placés mécaniquement en série avec le câble 2, entre les zones 4 et 5 de celui-ci, un positionnement à proximité immédiate de la zone 5 étant généralement préféré.

Ces moyens 72 de captation directe de la traction dans le câble 2 ont été simplement schématisés sous forme d'un bloc 93, à la figure 3, et peuvent présenter diverses formes ; ils peuvent être intégrés au raccordement du câble 2 à la charge 16 ou être prévus en parallèle avec une boucle du câble 2 à proximité immédiate de cette charge 16 ; ils peuvent être constitués par tout type de système télescopique, comportant deux parties raccordées respectivement au câble 2 et à la charge 16 et occupant une position relative caractéristique de la traction s'appliquant entre le câble 2 et la charge 16, et par exemple par l'association d'un potentiomètre linéaire ou d'un système inductif avec un ressort, à la façon d'un peson, ou encore d'être réalisés sous toute autre forme pour émettre un signal soit directement représentatif de la valeur effective de la traction 2, soit représentatif du résultat d'une comparaison entre la valeur d'un déplacement entre deux parties des moyens 93, raccordées respectivement au câble 2 et à la charge 16, et deux valeurs limites, de consigne, d'un tel déplacement, correspondant à des valeurs limites de consigne, respectivement maximale et minimale, de la traction dans le câble 2 en vue de l'acheminement de ce signal aux moyens de commande 99 et du traitement de ce signal dans ces moyens de commande pour piloter la vitesse de rotation de l'arbre 18 du moteur 14 de façon à maintenir la traction dans le câble 2 approximativement à une valeur constante déterminée.

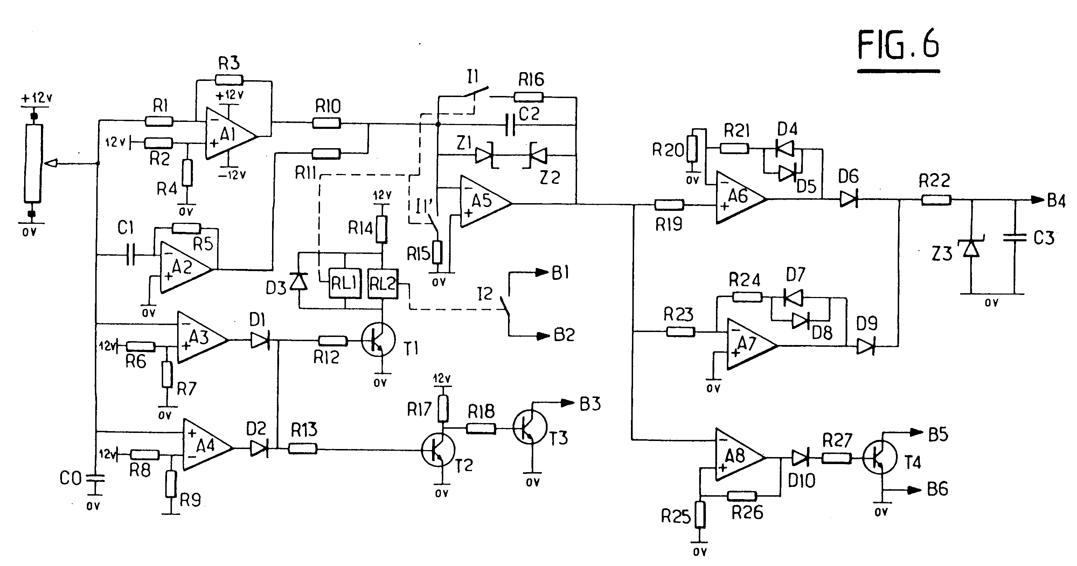

Maintenant en référence à la figure 6, on a représenté en détail une partie du dispositif de commande 99 du moteur 14. Ce dispositif 99 comprend un circuit de régulation basé sur un signal fourni par les moyens de captation de la traction dans le câble ou analogue, associé à un circuit électronique variateur de vitesse de commande en fréquence du moteur 14, de type bien connu de l'Homme du métier et qui ne sera pas décrit ici.

Le circuit de régulation selon l'invention est décrit en détail ci-dessous.

Le potentiomètre 84 de la figure 1 est représenté dans sa forme électrique et désigné par P.

Sa piste résistive est reliée entre deux bornes, respectivement une borne d'alimentation continue positive (par exemple +l2V) et une borne de masse, noté OV.

Le curseur de P est relié via une résistance R1 à l'entrée inverseuse d'un premier amplificateur opérationnel A1, dont l'entrée non-inverseuse est reliée au +12V via une résistance R2. La sortie de A1 est reliée à son entrée inverseuse via une autre résistance R3. Une résistance R4 est par ailleurs montée entre ladite entrée non-inverseuse et la masse OV.

Le curseur de P est par ailleurs relié via un condensateur C1 à l'entrée inverseuse d'un deuxième amplificateur opérationnel A2, dont l'entrée non-inverseuse est à la masse. Une résistance R5 est montée entre l'entrée inverseuse précitée et la sortie de A2.

Le curseur de P est encore relié à l'entrée inverseuse d'un troisième amplificateur opérationnel A3. L'entrée non-inverseuse de A3 est reliée d'une part à la tension +12V via une résistance R6 et d'autre part à la masse OV via une résistance R7.

Le curseur de P est relié en outre à l'entrée non-inverseuse d'un quatrième amplificateur opérationnel A4, dont l'entrée inverseuse est reliée d'une part à la tension continue +12V via une résistance R8 et d'autre part à la masse OV via une résistance R9.

Les amplificateurs opérationnels A3 et A4 sont montés en boucle ouverte.

Un condensateur CO relie enfin le curseur de P à la masse OV.

Les sorties de A1 et de A2 sont reliées via des résistance série respectives R10 et R11 à l'entrée inverseuse d'un cinquième amplificateur opérationnel A5. L'entrée non-inverseuse de A5 est à la masse. Sa sortie est reliée à son entrée inverseuse via un montage parallèle comprenant:
- dans une première branche, deux diodes zéner Z1 et Z2 montées en série et tête-bêche;
- dans une deuxième branche, un condensateur C2; et
- dans une troisième branche, le montage série d'une résistance R16 et d'un interrupteur I1 faisant partie d'un relais RL1.

L'entrée inverseuse de A5 est enfin reliée à la masse via un montage série d'un autre interrupteur I1' du relais RL1 et d'une résistance R15.

Les sorties de A3 et de A4 sont reliées respectivement aux anodes de deux diodes D1 et D2, dont les cathodes sont reliées ensemble à une première borne d'une résistance R12. La deuxième borne de R12 est reliée à la base d'un transistor bipolaire NPN T1, dont l'émetteur est à la masse et dont le collecteur est reliée à des premières bornes de commande des relais RL1 et RL2. Les deuxièmes bornes de commande de ces relais sont reliées à la tension +12V via une résistance R14. Une diode D3 est montée en parallèle avec les entrées de commande des deux relais.

Un interrupteur 12 faisant partie du relais RL2 est montée entre deux premières bornes de sortie B1 et B2 du montage.

Les cathodes de D1 et D2 sont par ailleurs reliées en commun à une première borne d'une résistance R13, dont la deuxième borne est reliée à la base d'un transistor bipolaire NPN T2. L'émetteur de T2 est à la masse. Son collecteur est relié à la tension +12V via une résistance R17, ainsi qu'à la base d'un autre transistor bipolaire NPN T3 via une résistance R18.

L'émetteur de T3 est à la masse. Son collecteur est relié à une autre borne de sortie B3 du circuit.

La sortie de A5 est reliée via une résistance R19 à l'entrée non-inverseuse d'un sixième amplificateur opérationnel A6, dont l'entrée inverseuse et reliée à la masse via une résistance R20. Cette entrée inverseuse est également reliée à une première borne d'une résistance R21. Un montage en parallèle et tête-bêche de deux diodes D4 et D5 est prévu entre la deuxième borne de R21 et la sortie de A6.

La sortie de A5 est reliée en outre, via une résistance R23, à l'entrée inverseuse d'un septième amplificateur opérationnel A7, dont l'entrée non-inverseuse est à la masse. L'entrée inverseuse de A7 est en outre reliée à une première borne d'une résistance R24. Un montage parallèle et tête-bêche de deux diodes D7 et D8 est prévu entre la deuxième borne de R24 et la sortie de A7.

Les sorties de A6 et de A7 sont reliées aux anodes de deux diodes respectives D6 et D9, dont les cathodes sont reliées ensemble, via une résistance série R22, à une autre borne de sortie B4 du circuit. Entre cette borne de sortie B4 et la masse OV sont par ailleurs prévues une diode zéner Z3 et un condensateur C3.

Enfin la sortie de A5 est reliée à l'entrée inverseuse d'un huitième amplificateur opérationnel A8, dont l'entrée non-inverseuse est reliée d'une part à la masse via une résistance R25, et d'autre part à sa sortie via une résistance R26. La sortie de A8 est reliée à l'anode d'une diode D10, dont la cathode est reliée via une résistance R27 à la base d'un autre transistor bipolaire NPN T4. L'émetteur de T4 est relié à la masse ainsi qu'à une borne de sortie B6 du circuit, tandis que son émetteur est relié à une borne de sortie B5 du circuit.

Les huit amplificateurs opérationnels du circuit décrit ci-dessus sont alimentés en courant continu de façon symétrique, c'est-à-dire avec deux sources de tension par exemple de +12V et de -12V par rapport à la masse.

Les bornes B1 à B6 du circuit décrit ci-dessus sont reliés au variateur de vitesse du moteur de la façon suivante:
- B1 et B2 sont reliées à des entrées correspondantes du variateur pour lui indiquer l'état actif ou inactif du circuit de régulation,
- B3 est reliée à une entrée d'arrêt de sécurité du variateur,
- B4 est reliée à une entrée de fixation de la vitesse de consigne du moteur 14, et
- B5 et B6 sont reliées à des entrées de fixation du sens de rotation du moteur 14.

Le circuit décrit ci-dessus fonctionne de la façon suivante.

On observera tout d'abord que sur le curseur de P est présente une tension (par rapport à la masse), notée VP, qui est comprise entre 0V et +12V et dont la valeur est représentative de la position du bras 78 du dispositif de la figure 1, et donc de la traction dans le câble ou analogue. En particulier, plus le bras 78 pivote autour de son axe dans le sens des aiguilles d'une montre (c'est-à-dire plus la traction dans le câble est élevée), et plus la tension VP est élevée.

On notera en outre que le circuit construit autour de A1 est un amplificateur capable de délivrer en sortie une tension continue variable égale à 2VF-VP, VF étant une tension fixe définie par les résistances R2 et R4 montées en pont diviseur. La tension 2VF définit ainsi une position de référence pour le curseur de P et donc pour le bras 78. Ainsi A1 est un adapteur qui délivre une tension positive ou négative dont la valeur est proportionnelle à l'écartement par rapport à la position de référence et dont le signe définit le sens de cet écartement.

Le circuit construit autour de A2 est un circuit dérivateur, c'est-à-dire qu'il délivre en sortie une tension proportionnelle à la vitesse à laquelle la valeur de VP évolue, une tension négative étant délivrée lorsque VP augmente et une tension positive étant délivrée lorsque VP diminue.

Le circuit construit autour de A5 est un circuit intégrateur, qui effectue une intégration de la somme algébrique pondérée des tensions issues de A1 et de A2, les valeurs des résistances R10 et R11 étant choisies de telle sorte que la tension issue du circuit dérivateur ait un rôle prédominant par rapport à la tension issue du circuit adapteur.

Les circuits construits autour de A3 et de A4 sont des circuits comparateurs destinés, comme on le verra plus loin, à déclencher certaines actions de sécurité lorsque la tension VP dépasse un seuil haut de sécurité, fixé par les valeurs de R8 et R9, ou vient en deçà d'un seuil bas de sécurité, fixé par les valeurs de R6 et R7.

On observera ici que la tension de référence 2VF est choisie intermédiaire entre les seuils haut et bas de sécurité sus-mentionnés.

Le circuit construit autour de A6 et A7 est un circuit de conversion en valeur absolue, capable de délivrer en sortie (au niveau de la connexion des diodes D6 et D9) une valeur de tension positive égale à la valeur absolue de la tension en sortie du circuit intégrateur. On observera ici qu'il s'agit d'un circuit de type classique en soi, à compensation des tensions de seuil des diodes.

Enfin le circuit construit autour de A8 est un circuit de conversion de signe, capable d'isoler ou de court-circuiter les bornes de sortie B5 et B6 en fonction du signe de la tension présente à la sortie de l'intégrateur. Plus précisément, si la tension en sortie de A5 est négative, T4 est bloqué, tandis que si cette tension est positive T4 est saturé.

Le fonctionnement du circuit est maintenant décrit en détail.

Supposons qu'initialement, le moteur asynchrone 14, tournant dans le sens de l'enroulement du câble, assure dans celui-ci la traction de consigne, déterminée par le contrepoids 81, c'est-à-dire que VP est égale à la tension de référence 2VF. Supposons également que l'intégrateur A5 délivre une tension négative.

Si maintenant la traction dans le câble ou analogue augmente du fait que le moteur asynchrone 14 tend à tourner à une vitesse excessive, alors le bras 78 tourne dans le sens des aiguilles d'une montre. A1 délivre donc une tension qui devient progressivement négative, tandis que A2 délivre également une tension négative. La valeur absolue de la tension de sortie de l'intégrateur A5 diminue donc par rapport à la valeur qu'elle avait précédemment, et cette valeur absolue est appliquée au variateur du moteur asynchrone 14, pour abaisser la vitesse de rotation de consigne de celui-ci.

On observera ici:
- d'une part que le circuit dérivateur A2 permet d'abaisser la tension de sortie de A5 d'autant plus vite que la vitesse d'évolution de VP est élevée, pour amener le moteur 14 à modifier d'autant plus vite sa vitesse de rotation de consigne; et
- que dans ce cas, les signes des tensions de sortie de A1 et de A2 sont les mêmes, ce qui contribue au même effet, à savoir un réajustement rapide de la vitesse de rotation de consigne du moteur.

Si maintenant, la vitesse de rotation de consigne du moteur 14 diminuant, la traction dans le câble tend à reprendre sa valeur de consigne, VP diminue et se rapproche à nouveau de la tension de référence 2VF.

Dans ce cas, A1 délivre encore une tension négative, mais dont la valeur absolue diminue, tandis que A2 délivre cette fois-ci une tension positive dont la valeur est d'autant plus élevée que VP revient rapidement vers la valeur de référence 2VF. Ainsi en fonction des valeurs respectives des tensions de sortie de AI et de A2, de signes opposés, la valeur absolue de la tension de sortie de A5 va:
- soit croître de nouveau, pour augmenter la vitesse de rotation de consigne du moteur 14 (cas où la traction dans le câble à tendance à se rétablir trop rapidement,
- soit rester essentiellement inchangée (cas où la traction dans le câble revient à la traction de consigne à une vitesse qu'on considère comme normale),
- soit continuer à baisser, pour diminuer encore la vitesse de rotation du moteur 14 (cas où la traction dans le câble ne revient pas suffisamment vite à la traction de consigne).

On observera que, dans tous les cas ci-dessus, la tension de sortie de A5 reste négative, les bornes B5 et B6 étant donc isolées l'une de l'autre, ce qui correspond bien à une rotation du moteur 14 dans le sens de l'enroulement.

On pourrait donner les explications équivalentes pour le cas où la traction dans le câble a tendance à devenir inférieure à la valeur de consigne, c'est-à-dire si le bras 78 tourne dans le sens inverse de celui des aiguilles d'une montre à partir de sa position de référence, la tension VP venant alors en deçà de 2VF. Dans ce cas, les polarités des tensions délivrées par A1 et A2 sont inversées, de même que l'effet de celles-ci sur la tension de sortie de A5.

On va maintenant décrire le fonctionnement du circuit lors du passage du dispositif de l'enroulement au déroulement, en passant par une phase d'arrêt.

Ceci implique tout d'abord une phase de décélération du câble, qui provoque elle-même un accroissement de traction du câble que le circuit régulateur va chercher à compenser comme explicité ci-dessus.

Dans ce cas, les tensions délivrées par A1 et A2 sont toutes deux négatives pendant une durée et/ou avec une valeur telle que le condensateur C2 de l'intégrateur va se décharger complètement puis se charger à nouveau avec la polarité inverse. A5 délivre donc à l'issue de cette décélération une tension positive. Les bornes B5 et B6 deviennent alors court-circuitées et le sens de rotation de consigne du variateur devient celui du déroulement.

Une nouvelle accélération du câble dans le sens inverse (début du déroulement) va là encore provoquer un accroissement de la traction dans celui-ci, que le circuit régulateur cherche là encore à annuler, ce qui a pour effet de parachever la charge de C2 avec ladite polarité opposée.

On observera ici que c'est en donnant à la tension de sortie de A2 un rôle prédominant par rapport à la tension de sortie de A1 sur le comportement de l'intégrateur qu'une phase de décélération-inversion de sens-accélération va pouvoir faire basculer la polarité de C2 et donc la polarité de la tension de sortie de A5.

La régulation s'effectue au cours du déroulement de la même manière que décrit ci-dessus. En particulier, un accroissement de la traction dans le câble va engendrer sur les sorties de A1 et A2 des tensions négatives qui vont accroître la charge de C2 et donc la tension de sortie de A5. Le moteur 14 va alors accélérer en vue d'annuler cet excès de traction. De même, une diminution de la traction va engendrer en sortie de A1 et A2 des tensions positives qui vont tendre à décharger C2 pour diminuer la tension de sortie de A5 et ralentir le moteur 14.

On observe donc que le circuit de la présente invention a pour effet, par la combinaison des circuits A1 et A2 et de l'intégrateur à deux polarités A5, recevant une somme algébrique pondérée des sorties de A1 et de A2, de piloter le moteur 14 à la fois en sens de rotation et en vitesse de rotation en se basant uniquement sur une information représentative de la traction dans le câble. On évite ainsi avantageusement d'avoir à détecter d'une manière ou d'une autre le sens de déplacement du câble. Le circuit de l'invention permet également au moteur de réagir rapidement lorsque la traction s'écarte dans un sens ou dans l'autre de la traction de consigne, et de réagir de façon plus différenciée, et en tous cas plus lente, lorsque la traction se rapproche de la traction de consigne. La régulation s'effectue donc d'une manière extrêmement efficace en ce que son action est à la fois rapide et non saccadée, toute entrée de la régulation en oscillation rapide étant empêchée.

Les circuits à seuil bâtis autour de A3 et A4 fonctionnent de la manière suivante. Dès que la tension VP sort, par excès ou par défaut, de l'intervalle des valeurs admissibles défini par les seuils haut et bas de sécurité mentionnés plus haut, alors la tension sur la première borne de R13 devient positive, et T2 est rendu passant, ce qui bloque T3. La borne B3 de commande d'arrêt du moteur, qui était antérieurement reliée à la masse via T3 est donc amenée "en l'air", ce qui arrête le moteur 14 (arrêt de sécurité). Dans le même temps, T1 est rendu passant, ce qui excite les relais RL1 et RL2. Les interrupteurs I1, I1' et I2 sont donc fermés. B1 et B2 sont donc court-circuités, ce qui signale au variateur de vitesse du moteur 14 que l'asservissement "normal" de la traction, assuré notamment par les circuits A1, A2 et A5, n'est pas en service. Et la fermeture de I1 et I1' a pour effet de réarmer l'intégrateur A5 en déchargeant son condensateur C2, dans le but notamment d'atteindre à nouveau une situation de régulation normale le plus vite possible lors d'un nouveau démarrage du moteur dans un sens ou dans l'autre.

Et dès qu'à la suite de ce démarrage, VP est revenue dans l'intervalle de valeurs admissibles susmentionné, alors les relais RL1 et RL2 ne sont plus excités, I1, I1' et I2 sont à nouveau ouverts et la régulation telle qu'on la décrite plus haut est à nouveau en service.

Bien entendu, l'Homme du métier saura apporter toute modification venant à son esprit au circuit de régulation tel qu'on l'a décrit. Il saura par ailleurs, par de simples mesures d'exécution, l'adapter à un dispositif du type de celui qu'on a décrit sur la figure 2, le balancier 90 tenant lieu alors, en fonction de sa position angulaire d'élément de captation de la traction dans le câble en association avec un potentiomètre ou analogue.

En outre, lorsque la nature du moteur auxiliaire 69 s'y prêtera, celui-ci pourra être régulé au même titre que le moteur 14, en termes de vitesse de rotation de son arbre de sortie 67, de façon à maintenir la traction dans le câble 2 à une valeur approximativement constante lors des phases d'enroulement.

De plus, lorsque l'on utilisera pour assurer l'entraînement du tambour 8 un réducteur 19 présentant plusieurs arbres d'entrée 21 dont chacun pourra être raccordé cinématiquement à un moteur d'entraînement respectif 14, de façon non illustrée mais connue d'un Homme du métier, chacun de ces moteurs pourra être régulé de la façon décrite, en vitesse de rotation de son arbre de sortie 18 raccordé sans possibilité de glissement à l'arbre d'entrée respectif 21 du réducteur 17, et être associé à un dispositif de freinage unidirectionnel respectif tel qu'illustré à la figure 4 ou à la figure 5, lequel pourra toutefois également n'être prévu qu'à un exemplaire monté de la façon décrite en référence à la figure 4, en association avec l'un des moteurs d'entraînement 14, ou de la façon décrite en référence à la figure 5, en association avec un arbre 46 du réducteur 17 ne correspondant à aucun moteur d'entraînement 14.

De façon générale, l'Homme du métier pourra prévoir de nombreuses variantes des dispositifs qui ont été décrits et représentés sans sortir pour autant du cadre de la présente invention.

## Revendications

1. Dispositif d'enroulement et de déroulement d'un câble (2) de transport d'énergie, ou analogue, au fur et à mesure d'un déplacement relatif de deux zones (4, 5) raccordées mutuellement par le câble (2) ou analogue, ledit dispositif comportant :
- un support (7) placé dans l'une (4) desdites zones (4, 5),
- un tambour (8) monté à la rotation autour d'un premier axe déterminé (9) par rapport au support (7) et susceptible de recevoir le câble (2) ou analogue,
- des moyens (13) d'entraînement du tambour (8) à la rotation autour du premier axe (9) dans un sens (10) d'enroulement du câble (2) ou analogue et dans un sens (12) de déroulement du câble (2) ou analogue, en exerçant une traction sur le câble (2) entre lesdites zones (4, 5), ces moyens d'entraînement (13) comportant eux-mêmes un moteur électrique d'entraînement (14) porté par le support (7) et présentant un arbre rotatif de sortie (18) et une chaîne (19) de liaison cinématique entre l'arbre de sortie (18) du moteur d'entraînement (14) et le tambour (8) de façon à associer aux sens d'enroulement et de déroulement (10, 12) des sens respectifs de rotation de l'arbre de sortie (18) du moteur d'entraînement (14),
- des moyens (99, 70, 71, 72) de commande des moyens d'entraînement (13), comportant des moyens (15, 2) d'alimentation du moteur d'entraînement (14) en électricité,
caractérisé en ce que :
- le moteur d'entraînement (14) est de type asynchrone, ses moyens d'alimentation en électricité (15) étant des moyens d'alimentation en courant alternatif, et son arbre de sortie (18) est en prise permanente, sans glissement, avec le tambour (8) par l'intermédiaire de la chaîne de liaison cinématique (19),
- les moyens de commande (99, 70, 71, 72) sont propres à provoquer l'alimentation du moteur d'entraînement (14) par les moyens (15, 2) d'alimentation de celui-ci en électricité de façon à faire tourner son arbre de sortie (18) soit dans un sens correspondant au sens d'enroulement (10), soit dans un sens correspondant au sens de déroulement (12), ou à interrompre l'alimentation du moteur d'entraînement (14), et comportent des moyens (70, 71, 72) sensibles à ladite traction, pour réguler l'alimentation du moteur d'entraînement (14) en variation de fréquence de façon à maintenir ladite traction à une valeur approximativement constante à l'enroulement et au déroulement du câble ou analogue,
- des moyens (24) sont prévus pour exercer un freinage unidirectionnel, calibré, de l'arbre de sortie (18) du moteur d'entraînement (14) dans le sens correspondant au sens de déroulement (12).

2. Dispositif selon la revendication 1, caractérisé en ce que les moyens (24) pour exercer un freinage unidirectionnel, calibré, de l'arbre de sortie (18) du moteur d'entraînement (14) comportent :
- un arbre de freinage (21, 46) monté à la rotation autour d'un deuxième axe déterminé (17, 47) par rapport au support (7),
- des moyens (19) de liaison cinématique permanente, sans glissement, entre l'arbre de freinage (21, 46) et l'arbre de sortie (18) du moteur d'entraînement (14), de façon à associer aux sens d'enroulement et de déroulement (10, 12) des sens respectifs de rotation de l'arbre de freinage (21, 46),
- un coupleur (26, 56) du type comportant deux parties (25, 27, 61, 63) mobiles à la rotation l'une par rapport à l'autre autour d'un axe (17, 47), à l'encontre d'un couple résistant déterminé, une première (25, 61) desdites parties (25, 27, 61, 63) étant coaxiale à l'arbre de freinage ( 21, 46) et solidaire de celui-ci, et
- un mécanisme de roue libre (45, 68) raccordant la deuxième (27, 63) desdites parties (25, 27, 61, 63) au support (7) en étant passant dans le sens de rotation de l'arbre de freinage (21, 46) correspondant au sens d'enroulement (10) et bloquant dans le sens de rotation de l'arbre de freinage (21, 46) correspondant aux sens de déroulement (12).

3. Dispositif selon la revendication 1, caractérisé en ce que les moyens (24) pour exercer un freinage unidirectionnel, calibré, de l'arbre de sortie (18) du moteur d'entraînement (14) comportent :
- un arbre de freinage (46) monté à la rotation autour d'un deuxième axe déterminé (47) par rapport au support (7),
- des moyens (19) de liaison cinématique permanents, sans glissement, entre l'arbre de freinage (46) et l'arbre de sortie (18) du moteur d'entraînement (14), de façon à associer aux sens d'enroulement et de déroulement ( 10, 12) des sens respectifs de rotation de l'arbre de freinage (46),
- un coupleur (56) du type comportant deux parties (61, 63) mobiles à la rotation l'une par rapport à l'autre autour d'un axe (47), à l'encontre d'un couple résistant déterminé, une première (61) desdites parties (61, 63) étant coaxiale à l'arbre de freinage (46) et solidaire de celui-ci,
- un moteur électrique auxiliaire (69) présentant un arbre rotatif de sortie (67), coaxial à l'arbre de freinage (46) et portant de façon coaxiale et solidaire la deuxième (63) desdites parties (61, 63),
- des moyens (15, 2) d'alimentation du moteur auxiliaire (69) en électricité, commandés par les moyens de commande (99) pour alimenter le moteur auxiliaire (69) en électricité, de façon à faire tourner l'arbre de sortie (67) de celui-ci dans un sens correspondant au sens d'enroulement (10), au moins pendant l'alimentation du moteur d'entraînement (14), par les moyens (15, 2) d'alimentation de celui-ci en électricité, de façon à faire tourner l'arbre de sortie (18) du moteur d'entraînement (14) dans un sens correspondant au sens d'enroulement (10), ou pour interrompre l'alimentation du moteur auxiliaire (69) en électricité,
- un mécanisme de roue libre (68) raccordant l'arbre de sortie (67) du moteur auxiliaire (69) au support (7) en étant passant dans le sens de rotation de l'arbre de sortie (67) du moteur auxiliaire (69) correspondant au sens d'enroulement (10) et bloquant dans le sens de rotation de l'arbre de sortie (67) du moteur auxiliaire (69) correspondant au sens de déroulement (12).

4. Dispositif selon la revendication 3, caractérisé en ce que les moyens de commande (99, 70, 71, 72) sont propres à interrompre l'alimentation du moteur auxiliaire (69) par les moyens (15, 2) d'alimentation de celui-ci en électricité pendant l'arrêt de l'alimentation du moteur d'entraînement (14) par les moyens (15, 2) d'alimentation de celui-ci en électricité et pendant l'alimentation du moteur d'entraînement (14) par les moyens (15, 2) d'alimentation de celui-ci en électricité de façon à faire tourner l'arbre de sortie (18) du moteur d'entraînement (14) dans un sens correspondant au sens de déroulement (12).

5. Dispositif selon l'une quelconque des revendications 3 et 4, caractérisé en ce que le moteur auxiliaire (69) est synchrone, ses moyens (15, 2) d'alimentation en électricité étant des moyens (15, 2) d'alimentation en courant alternatif.

6. Dispositif selon l'une quelconque des revendications 2 à 5, caractérisé en ce que le coupleur (26, 100) est un coupleur magnétique à hystérésis.

7. Dispositif selon l'une quelconque des revendications 1 à 6, caractérisé en ce que les moyens (72), sensibles à ladite traction, comportent des moyens (72) de captation directe de ladite traction, placés mécaniquement en série avec ledit câble (2) ou analogue entre lesdites zones (4, 5).

8. Dispositif selon l'une quelconque des revendications 1 à 6, caractérisé en ce que les moyens (70, 71), sensibles à ladite traction, comportent des moyens (76, 91) de déviation dudit câble (2) ou analogue entre lesdites zones (4, 5), portés par le support (7) et susceptibles de s'effacer de façon réversible sous l'effet de ladite traction, et des moyens (84, 85, 86) de captation de la position desdits moyens de déviation (76, 91).

9. Dispositif selon l'une quelconque des revendications 1 à 8, caractérisé en ce que les moyens (70, 71), sensibles à ladite traction, comportent des moyens (78, 90) pour délivrer un signal de valeur représentative de la valeur de ladite traction, des moyens (85, 86) pour fixer des valeurs de consigne audit signal, correspondant à des valeurs respectivement maximale et minimale admissibles de ladite traction, des moyens pour comparer la valeur du signal aux valeurs de consigne et délivrer un signal représentatif du résultat de cette comparaison, et des moyens (99) pour piloter en fonction de ce signal l'alimentation du moteur d'entraînement (14) par les moyens (2, 15) d'alimentation de celui-ci en électricité, de façon à maintenir la valeur réelle de la traction entre les valeurs de consigne.

10. Dispositif selon la revendication 1, caractérisé en ce que les moyens (99) pour réguler l'alimentation du moteur d'entraînement (14) en variation de fréquence comprennent:
un circuit de régulation (figure 6) qui reçoit un signal électrique VP représentatif de la traction dans le câble et qui comporte:
- un moyen d'adapation (A1) capable de délivrer un signal électrique dont la valeur est une fonction monotone de l'écart entre la valeur réelle de la traction et une valeur de consigne de ladite traction,
- un moyen de dérivation (A2 capable de délivrer en sortie un signal électrique dont la valeur est une fonction monotone de la vitesse de variation de la valeur réelle de la traction,
- un moyen d'intégration à deux polarités (A5) recevant les signaux électriques délivrés par le moyen d'adaptation et par le moyen de dérivation,
et
un circuit variateur de vitesse opérant par variation de fréquence, piloté en variation de vitesse et en changement de sens par la sortie dudit moyen d'intégration.

11. Dispositif selon la revendication 10, caractérisé en ce que les signaux électriques délivrés par le moyen d'adaptation et par le moyen de dérivation sont des tensions positives ou négatives dont les signes sont représentatifs respectivement de la position de la valeur réelle de la traction par rapport à la valeur de consigne de la traction et du sens de variation de la valeur réelle de la traction, et en ce qu'une somme algébrique pondérée desdites tensions est appliquée au moyen d'intégration.

12. Dispositif selon l'une des revendications 10 et 11, caractérisé en ce que le circuit de régulation comprend en outre, à la sortie du moyen d'intégration (A5), un moyen de conversion en valeur absolue (A6, A7) et un moyen de commutation (T4) commandé par polarité, dont les sorties respectives sont reliées à une entrée de consigne de vitesse et à une entrée de consigne de sens de rotation du variateur.

13. Dispositif selon l'une des revendications 10 à 12, caractérisé en ce qu'il comprend en outre des moyens comparateurs fixant des seuils de sécurité haut et bas pour la valeur réelle de la traction, lesdits moyens comparateurs étant capables d'appliquer au circuit variateur de vitesse un signal d'arrêt de sécurité et étant capables en outre de réarmer le moyen d'intégration.
